**Europäisches Patentamt**

**European Patent Office**

**Office européen des brevets**

(19)

(11) Publication number : **0 414 242 B1**

(12)

# EUROPEAN PATENT SPECIFICATION

(45) Date of publication of patent specification :
**15.07.92 Bulletin 92/29**

(51) Int. Cl.⁵ : **F16L 15/04**, E21B 17/02,
F16L 25/00

(21) Application number : **90116164.6**

(22) Date of filing : **23.08.90**

(54) **Pipe joint and pipe with pipe joint.**

(30) Priority : **24.08.89 JP 97920/89 U**

(43) Date of publication of application :
**27.02.91 Bulletin 91/09**

(45) Publication of the grant of the patent :
**15.07.92 Bulletin 92/29**

(84) Designated Contracting States :
**DE FR GB**

(56) References cited :
**GB-A- 1 503 395**
**US-A- 4 822 081**
**US-A- 4 893 844**

(72) Inventor : **Akiyama, Hiroshi, c/o Patent &
Licence Dept.
NKK Keihin Bldg. 1-1, Minamiwatarida-cho
Kawasaki-ku, Kawasaki 210 (JP)**
Inventor : **Nakano, Takashi, c/o Patent &
Licence Dept.
NKK Keihin Bldg. 1-1, Minamiwatarida-cho
Kawasaki-ku, Kawasaki 210 (JP)**
Inventor : **Ishihara, Toshio, c/o Patent &
Licence Dept.
NKK Keihin Bldg. 1-1, Minamiwatarida-cho
Kawasaki-ku, Kawasaki 210 (JP)**

(74) Representative : **Füchsle, Klaus, Dipl.-Ing. et al
Hoffmann . Eitle & Partner Patentanwälte
Arabellastrasse 4
W-8000 München 81 (DE)**

(73) Proprietor : **NKK CORPORATION
1-2, Marunouchi 1-chome Chiyoda-ku
Tokyo 100 (JP)**

EP 0 414 242 B1

## Description

This invention relates to the field of pipe joint and pipe with pipe joint which are being used in oil field technology or other general purpose areas, wherein a high sealing capability is required to prevent fluid in the piping system from leaking.

As for the joints for metallic pipe, plastic pipe, and fiber reinforced plastic pipe, bell and spigot type joint, or glued joint, flanged type joint, screwed type joint, etc are utilized.

The glued joint is mainly used for plastic pipes. The inside of the end of a plastic pipe is tapered which constitutes a female joint, whereas the outside of the end of another plastic pipe is tapered which constitutes a male joint. Both joints are jointed together by adhesive painted on the tapered surfaces. In some cases the tapered surfaces are equipped with screw and painted with adhesive.

Following problems are reported, as for the above-mentioned glued joint.

(1) Disengagement of the joints is impossible since the joints are glued.

(2) The resistance to shear on the glued surface is comparatively low, which is 1 to 2 kgf/mm². Therefore the glued surface should be enlarged and the joint be magnified to endure with the high hydraulic pressure of the fluid in the piping system.

(3) The jointing operation is done at the operation site, and the operability is significantly worsened.

The flanged type joint is widely used in the metallic, plastic, and fiber reinforced plastic pipes. However the hydraulic pressure of the fluid which is within the range of the sealing capacity, is comparatively low; 10 to 35 kgf/cm² for plastic pipe, and about 210 kgf/cm² for metallic pipe.

The screwed type joint is widely used one. The screw may be a pair of parallel screws or tapered screws. The sealing is done by an O ring or by using the contact pressure between the thread of the screw in case of the metallic pipe joint.

The following problems are pointed out in the joints wherein the materials of the male and female joints are the combination of metal with nonmetal, metal and fiber reinforced plastic, hereinafter FRP.

(1) The hydraulic pressure within the sealing capacity is comparatively low; 300 to 350 kgf/cm².

(2) The above pressure can be varied due to the inaccuracy of the working of the surface of the thread.

(3) The pertinent index for the termination of the screwing operation is difficult to determine, which leads to the damage of the plastic pipe and the FRP pipe by overscrewing.

(4) In case of tapered screw type joints the torque for screwing is gradually increased which makes the determination of the termination of the screwing difficult for operators.

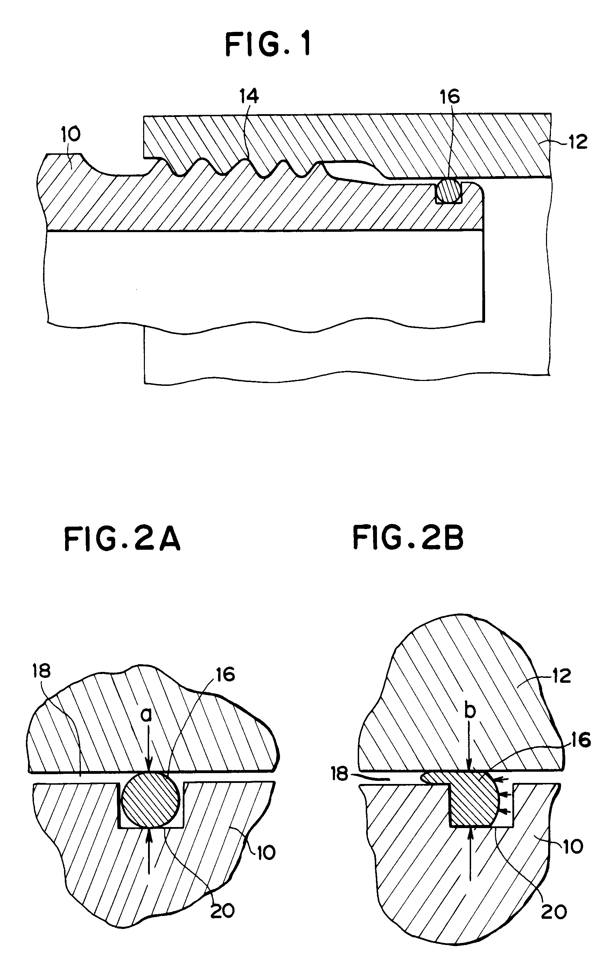

Figure 1 shows the sectional view of the conventional screwed pipe joint.

As shown in Figure 1, the male joint 10 is fitted to the female joint 12 by the tapered screws 14 with the O ring 16. Figure 2A and 2B show the enlarged views of Figure 1 with respect to the parts surrouding the O ring. As shown in Figure 2A a predetermined force "a" is applied on the O ring. As shown in Figure 2B, when hydraulic pressure is applied on the O ring, the ring is deformed and a part of the O ring is pressed in the gap of the joints 18 out of the groove 20. When the force applied on the ring reaches "b" as the combined effect of "a" plus hydraulic pressure, the ring is destroyed and the fluid leaks into the gap 18. As explained above, in case of the joints having the sealing mechanism using O ring, the problem of leakage is inevitable, with the exception of the joints with the materials, metal with metal.

It is an object of the invention to provide a pipe joint having high tight sealing capacity. It is an object of the invention to provide a pipe with pipe joint having high tight sealing capacity.

According to the invention there is provided a pipe joint according to claim 1

The problem encountered in the conventional pipe joint as described is the deformation which leads to the destruction, of the sealing part, the O ring when it is under the internal hydraulic pressure.

To evade the problem, the gap between the male and the female joint members should be nullified. The inventors solved the problem by contacting a part of both joint members adjacent to O ring, which is situated at the opposite side of the pressurized zone. By providing the contact zone, the deformation of the O ring is confined in the groove without the destruction of the ring.

The means of coupling the male and female joints may be screws or flanges. The materials of the male and female joints may be metallic, plastic, or of fiber reinforced plastic. The groove may be in to the male or the female joint member.

It is quite apparent that a pipe with such type of pipe joint is fitted to the purpose, the function, and the result of the invention.

Figure 1 is the sectional view of the conventional screwed pipe joint;

Figure 2A and Figure 2B are the enlarged views of Figure 1 with respect to the parts surrounding the O ring;

Figure 3 is a typical embodiment of the invention;

Figures 4A and 4B are the enlarged views of Figure 3 with respect to the parts surrouding the O ring;

Figure 5 is an example of the embodiment of the invention;

Figure 6 is another example of the embodiment of the invention;

Figure 7 is another example of the embodiment of the invention; and

Figure 8 is another example of the embodiment of the invention;

The problem encountered in the conventional pipe joint as described in Figures 1, 2A, and 2B, is the deformation which leads to the destruction, of the sealing part, the O ring when it is under the internal hydraulic pressure.

To evade the problem, the gap between the male and the female joints denoted as the gap 18 in Figure 2B, should be nullified. The inventors solved the problem by contacting parts of both joint members adjacent to O ring, which are situated at the opposite side of the pressurized zone. By providing the contact zone, the deformation of the O ring is confined in the groove 20 denoted in Figure 2B without the destruction of the O ring.

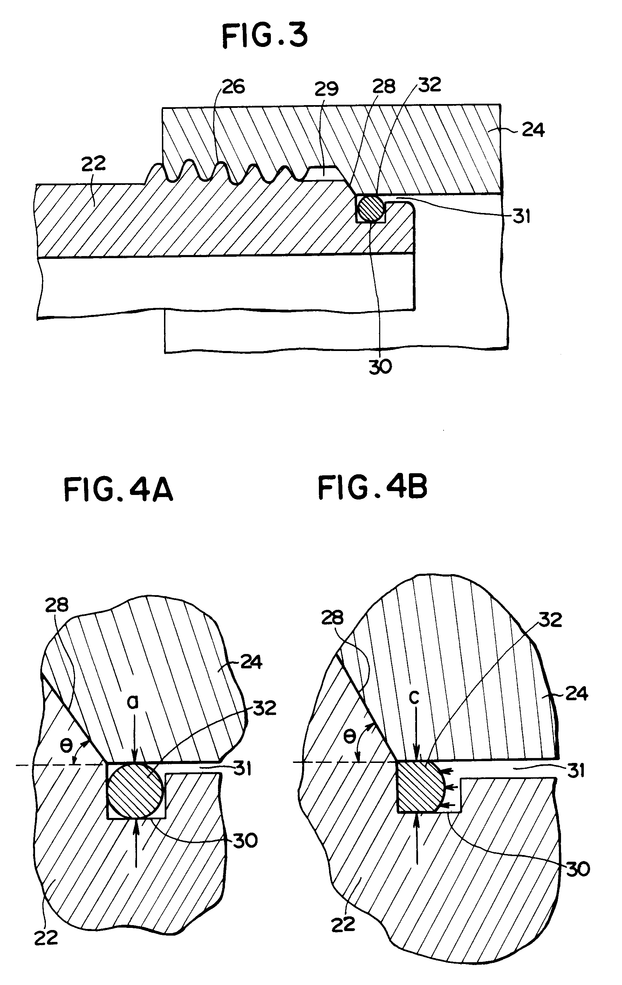

Figure 3 is the sectional view of the screw joint of a typical embodiment of the invention. The male joint 22 is coupled with the female joint 24 by the screw 26. Both joint members are contacted at the contact surface 28.

To ensure the contact the unthreaded zone 29 is provided between the screw and the contact surface. Adjacent to the contact surface on the side of the male joint 22, the groove 30 for accomodating the O ring 32 is provided.

Adjacent to the groove 30 the gap 31 between both joint members is provided to fit the male joint 22 into the female joint 24.

Figures 4A and 4B are the enlarged views of Figure 3 with respect to the parts surrouding the O ring. As shown in Figure 4A, a predetermined force "a" is applied on the O ring. As shown in Figure 4B, when hydraulic pressure is applied on the ring, the ring is deformed. When the force applied on the ring reaches "c" as the combined effect of "a" plus hydraulic pressure, the ring is deformed and pressed to the wall of the groove. But the fluid does not leak into the unthreaded zone 29, since no irregular deformation of O ring is initiated to allow the fluid to come into the unthreaded zone. The angle made by the contact zone 28 and the axial direction of the joints is denoted as $\Theta$. The angle may vary between 0 to 90 degree. However the angle is pertinent between 20 to 80 degree to ensure the good contact. In this embodiment, the O ring and the groove are provided on the side of the male joint. However the effect is the same when the O ring and the groove are provided on the female side. The above explained technical thoughts are further explained in the following examples.

It is quite apparent that this invention is applicable in case of the pipe with the invented pipe joint.

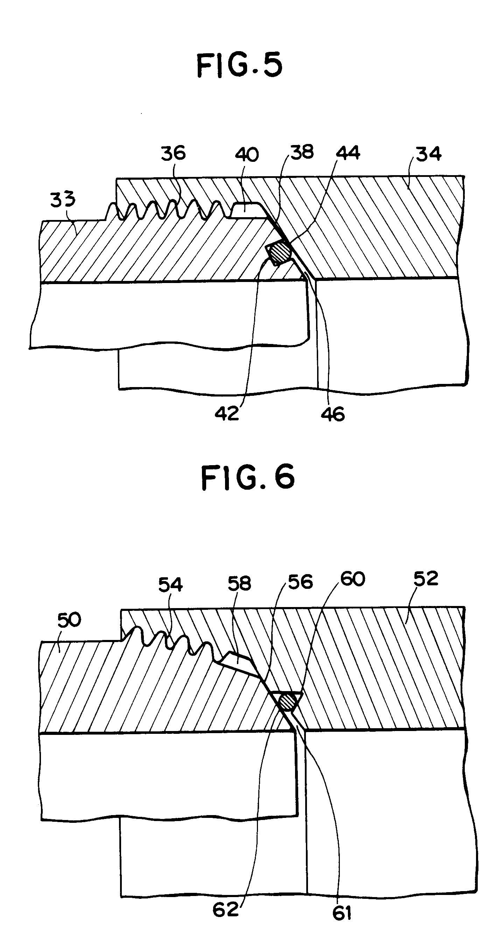

Figure 5 is an example of the embodiment of the invention. The male joint 33 is coupled with the female joint 34 by the thread 36. The both joints are contacted at the contact surface 38.

To ensure the contact the unthreaded zone 40 is provided between the screw and the contact surface. Adjacent to the contact zone on the side of the male joint 33, the groove 42 for accomodating the O ring 44 is provided. Adjacent to the groove 42 the gap 46 between the both joint is provided to ensure the good contact. In this embodiment, the O ring and the groove are provided on the side of the male joint. However the effect is the same when the O ring and the groove are provided on the female side.

Figure 6 is another example of the embodiment of the invention. The male joint 50 is coupled with the female joint 52 by the tapered thread 54. The both joints are contacted at the contact surface 56.

To ensure the contact the unthreaded zone 58 is provided between the screw and the contact surface. Adjacent to the contact zone on the side of the female joint 52, the groove 60 for accomodating the O ring 62 is provided. Adjacent to the groove 60 the gap 61 between the both joints is provided to ensure the good contact. In this case the shape of the section of the groove 60 is triangular.

In this embodiment, the O ring and the groove are provided on the side of the female joint. However the effect is the same when the O ring and the groove are provided on the male side.

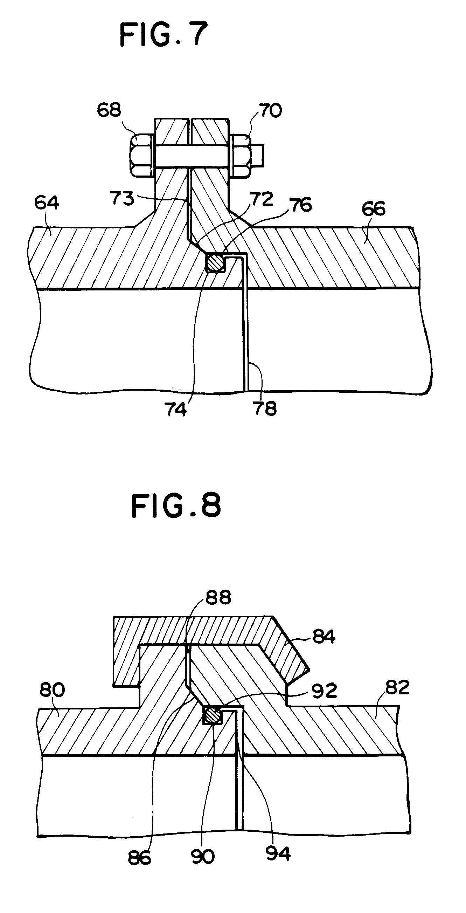

Figure 7 is another example of the embodiment of the invention. The flanged male joint 64 is coupled with the flanged female joint 66 by the bolt 68 and the nut 70. The both joints are contacted at the contact surface 72.

To ensure the contact the clearance 73 is provided between the joints. Adjacent to the contact zone on the side of the flanged male joint 64, the groove 74 for accomodating the O ring 76 is provided. Adjacent to the groove 74 the gap 78 in between the both joint is provided to ensure the good contact. In this case the shape of the section of the groove 74 is square.

In this embodiment, the O ring and the groove are provided on the side of the male joint. However the effect is the same when the O ring and the groove are provided on the female side.

Figure 8 is another example of the embodiment of the invention. The flanged male joint 80 is coupled with the flanged female joint 82 by the means of engaging the flanges, in this case, by shrinkage fitting fixture 84. The both joints are contacted at the contact surface 86.

To ensure the contact the clearance 88 is provided between the joints. Adjacent to the contact zone on the side of the flanged male joint 80, the groove 90 for accomodating the O ring 92 is provided. Adjacent to the groove 90 the gap 94 between the both joint is provided to ensure the good contact. In this case the shaped of the groove 90 is square sectional shape.

In this embodiment, the O ring and the groove are provided on the side of the male joint. However the effect is the same when the O ring and the groove are provided on the female side.

Examples

Hydraulic Pressure Test

The hydrulic pressure tests are carried out to guarantee the invention.

The test is conducted by the method described in ASTM D-1599 " THE SHORT TIME HYDRAULIC FAILURE PRESSURE OF PLASTIC PIPE, TUBING, AND FITTING " . The invented joints are used in tests from 1 to 5, and conventional joints are used in tests 6 and 7.

Test 1

The test sample is made of FRP male screwed joint and 13 Cr steel female screwed joint. The FRP tube has the dimensions; 50 mm in internal diameter and 8 mm in thickness.

The test was interrupted since the FRP tubing was destructed at the pressure of 840 kgf/cm$^2$.

Test 2

The test sample is made of FRP male and female screwed joints. The FRP tube has the dimensions; 50 mm in internal diameter and 8 mm in thickness.

The test was interrupted since the FRP tubing was destructed at the pressure of 820 kgf/cm$^2$.

Test 3

The test sample is made of metallic male screwed joint and FRP female screwed joint. The FRP tube has the dimensions; 50 mm in internal diameter and 12 mm in thickness.

The test pressure without the destruction of the joints was more than 1050kgf/cm$^2$, which is the target value.

Test 4

The test sample is made of metallic male flanged joint and FRP female flanged joint. The FRP tube has the dimensions; 50 mm in internal diameter and 12 mm in thickness. The test pressure without the destruction of the joints was more than 1000 kgf/cm$^2$, which is the target value.

Test 5

The test sample is made of polyethyrene male screwed joint and polyethyrene female screwed joint. The polyethyrene tube has the dimensions; 48 mm in internal diameter and 6 mm in thickness.

The test was interrupted since the polyethyrene tubing was destructed at the pressure of 40 kgf/cm$^2$.

Test 6 The test sample is made of FRP male screwed joint and 13 Cr steel female screwed joint. The test was interrupted since the leakage was found at the joint at the pressure of 450 kgf/cm$^2$.

Test 7

The test sample is made of FRP screwed joint. The test was interrupted since the leakage was found at the joint at the pressure of 480 kgf/cm$^2$.

Reference signs in the claims are intends for better understanding and shall not limit the scope.

**Claims**

1. A pipe joint having coupled male and female joint members (22), (24) , comprising:
   a contact surface (28) on the male member;
   a contact surface on the female member, which is contacted with the contact surface of the male member in coupling the male member with the female member;
   a groove (30) situated in one member adjacent to one said contact surface, of which groove the opening faces a surface of the opposite member, and is connected to fluid in pipe via a clearance (31) between surfaces of the members next to the groove; and
   an O ring (32) which is contained in said groove, of which ring portions ends are contacted with the male and female members.

2. The pipe joint of claim 1, characterized in that the coupling means is screws, the thread of the screw of the male joint member being coupled with the thread of the screw of the of the female joint member, wherein the screwing action is hampered by the contact surfaces.

3. The pipe joint of claim 1, characterized in that the coupling means is flanges attached to the male and female joint members, which are pressed together by combination of bolts and nuts, wherein the pressing action is hampered by the contact surfaces.

4. The pipe joint of claim 1, characterized in that the coupling means is flanges attached to the male and female joint members, which are pressed together by a shrinkage fitting fixture, wherein the pressing action is hampered by the contact surfaces.

5. The pipe joint of claim 1, characterized in that said groove is in the male joint member.

6. The pipe joint of claim 2, characterized in that said groove is in the male joint member.

7. The pipe joint of claim 3, characterized in that said groove is in the male joint member.

8. The pipe joint of claim 4, characterized in that said groove is in the male joint member.

9. The pipe joint of claim 1, characterized in that said groove is in the female joint member.

10. The pipe joint of claim 2, characterized in that said groove is in the female joint member.

11. The pipe joint of claim 3, characterized in that said groove is in the female joint member.

12. The pipe joint claim 4, characterized in that said groove is in the female joint member.

13. The pipe joint of claim 1, characterized in that the material of the male joint is metal and the material of the female joint member is plastic.

14. The pipe joint of claim 1, characterized in that the material of the male joint member is metal and the material of the female joint member is fiber reinforced plastic.

15. The pipe joint of claim 1, characterized in that the material of the male joint is plastic and the material of the female joint member is metal

16. The pipe joint of claim 1, characerized in that the material of the male joint is plastic and the material of the female joint member is plastic.

17. The pipe joint of claim 1, characterized in that the material of the male joint is plastic and the material of the female joint member is fiber reinforced plastic.

18. The pipe joint of claim 1, characterized in that the material of the male joint member is fiber reinforced plastic and the material of the female joint member is metal.

19. The pipe joint of claim 1, characterized in that the material of the male joint member is fiber reinforced plastic and the material of the female joint member is plastic.

20. The pipe joint of claim 1, characterized in that the material of the male joint member is fiber reinforced plastic and the material of the female joint member is fiber reinforced plastic.

21. An assembly comprising a pipe joint according to claim 1 having a pipe connected to said pipe joint.

22. The assembly of claim 21, characterized in that the pipe is connected to the male joint member.

23. The assembly of claim 21, characterized in that the pipe is connected to the female joint member.

## Patentansprüche

1. Rohrverbindung mit einem Innenverbindungsglied und einem Außenverbindungsglied (22, 24), die miteinander gekoppelt sind, umfassend:

eine an dem Innenglied vorgesehene Kontaktfläche (28):

eine an dem Außenglied vorgesehene Kontaktfläche, welche die Kontaktfläche des Innengliedes durch Koppelm des Innengliedes mit dem Außenglied berührt:

eine an einem Glied neben einer Kontaktfläche angeordnete Nut (30), deren Öffnung einer Fläche des gegenüberliegenden Gliedes zugekehrt ist und die über einen Freiraum (31) zwischen den Flächen der Glieder neben der Nut mit Fluid in dem Rohr in Verbindung steht; und

einen O-Ring (32), der in der Nut enthalten ist, wobei Abschnitte des Ringes das Innenglied und das Außenglied berühren.

2. Rohrverbindung nach Anspruch 1, dadurch gekennzeichnet , daß die Koppeleinrichtung aus Schrauben besteht, das Gewinde der Schraube des Innenverbindungsgliedes mit dem Gewinde der Schraube des Außenverbindungsgliedes gekoppelt ist, wobei die Schraubwirkung durch die Kontaktflächem behindert ist.

3. Rohrverbindung nach Anspruch 1, dadurch gekennzeichnet , daß die Koppeleinrichtung aus Flanschen besteht, die an dem Innenverbindungsglied und dem Außenverbindungsglied befestigt sind, die durch eine Kombination aus Bolzen und Muttern zusammengepreßt werden, wobei der Preßvorgang durch die Kontaktflächen behindert ist.

4. Rohrverbindung nach Anspruch 1, dadurch gekennzeichnet , daß die Koppeleinrichtung aus Flanschen besteht, die an dem Innenverbindungsglied und dem Außenverbindungsglied angebracht sind, die durch eine Schrumpfsitzbefestigung zusammengepreßt werden, wobei der Preßvorgang durch die Kontaktflächen behindert ist.

5. Rohrverbindung nach Anspruch 1, dadurch gekennzeichnet , daß sich die Nut an dem Innenverbindungsglied befindet.

6. Rohrverbindung nach Anspruch 2, dadurch gekennzeichnet , daß sich die Nut an dem Innenverbindungsglied befindet.

7. Rohrverbindung nach Anspruch 3, dadurch gekennzeichnet , daß sich die Nut an dem Innenverbindungsglied befindet.

8. Rohrverbindung nach Anspruch 4, dadurch gekennzeichnet , daß sich die Nut an dem Innenverbindungsglied befindet.

9. Rohrverbindung nach Anspruch 1, dadurch gekennzeichnet , daß sich die Nut an dem Außenverbindungsglied befindet.

10. Rohrverbindung nach Anspruch 2, dadurch gekennzeichnet , daß sich die Nut an dem Außenverbindungsglied befindet.

11. Rohrverbindung nach Anspruch 3, dadurch gekennzeichnet , daß sich die Nut an dem Außenverbindungsglied befindet.

12. Rohrverbindung nach Anspruch 4, dadurch gekennzeichnet , daß sich die Nut an dem Außenverbindungsglied befindet.

13. Rohrverbindung nach Anspruch 1, dadurch gekennzeichnet , daß das Material der Innenverbindung Metall ist und das Material der Außenverbindung Kunststoff ist.

14. Rohrverbindung nach Anspruch 1, dadurch gekennzeichnet , daß das Material des Innenverbindungsgliedes Metall ist unddas Material des Außenverbindungsgliedes faserverstärkter Kunststoff ist.

15. Rohrverbindung nach Anspruch 1, dadurch gekennzeichnet , daß das Material der Innenverbindung Kunststoff ist und das Material des Außenverbindungsgliedes Metall ist.

16. Rohrverbindung nach Anspruch 1, dadurch gekennzeichnet , daß das Material der Innenverbindung Kunststoff ist und das Material des Außenverbindungsgliedes Kunststoff ist.

17. Rohrverbindung nach Anspruch 1, dadurch gekennzeichnet , daß das Material der Innenverbindung Kunststoff ist und das Material des Außenverbindungsgliedes faserverstärkter Kunststoff ist.

18. Rohrverbindung nach Anspruch 1, dadurch gekennzeichnet , daß das Material des Innenverbindungsgliedes faserverstärkter Kunststoff ist und das Material des Außenverbindungsgliedes Metall ist.

19. Rohrverbindung nach Anspruch 1, dadurch gekennzeichnet , daß das Material des Innenverbindungsgliedes faserverstärkter Kunststoff und das Material des Außenverbindungsgliedes Kunststoff ist.

20. Rohrverbindung nach Anspruch 1, dadurch gekennzeichnet , daß das Material des Innenverbindungsgliedes faserverstärkter Kunststoff und das Material des Außenverbindungsgliedes faserverstärkter Kunststoff ist.

21. Anordnung mit einer Verbindung nach Anspruch 1, wobei mit der Rohrverbindung ein Rohr verbunden ist.

22. Anordnung nach Anspruch 21, dadurch gekennzeichnet , daß das Rohr mit dem Innenverbindungsglied verbunden ist.

23. Anordnung nach Anspruch 21, dadurch gekennzeichnet , daß das Rohr mit dem Außenverbindungsglied verbunden ist.

## Revendications

1. Une jonction de tuyau munie d'éléments de jonction mâle et femelle (22), (24) couplés, comprenant :
   une surface de contact (28) sur l'élément mâle ;
   une surface de contact sur l'élément femelle, qui est en contact avec la surface de contact de l'élément mâle lorsqu'on couple l'élément mâle à l'élément femelle ;
   une rainure (30) située sur un élément adjacent à l'une desdites surfaces de contact, l'ouverture de ladite rainure faisant face à une surface de l'élément opposé et étant connectée au fluide dans le tuyau via un jeu (31) entre les surfaces des éléments contigus à la rainure ; et
   un joint torique (32) qui est enfermé dans ladite rainure, dont les parties périphériques sont en contact avec les éléments mâle et femelle.

2. La jonction de selon la revendication 1, caractérisée en ce que les moyens de couplage sont des vis, le filet de la vis de l'élément de jonction mâle étant couplé au filet de la vis de l'élément de jonction femelle, dans laquelle l'action de vissage est entravée par les surfaces de contact.

3. La jonction de tuyau selon la revendication 1, caractérisée en ce que les moyens de couplage sont des collerettes fiées aux éléments de jonction mâle et femelle, qui sont pressées ensemble au moyen d'une combinaison de boulons et d'écrous, dans laquelle l'action de pressage est entravée par les surfaces de contact.

4. La jonction de tuyau selon la revendication 1, caractérisée en ce que les moyens de couplage sont des collerettes fiés aux éléments de jonction mâle et femelle, qui sont pressés ensemble par contraction des moyens de fixation, dans laquelle l'action de pressage est entravée par les surfaces de contact.

5. La jonction de tuyau selon la revendication 1, caractérisé en ce que ladite rainure est dans l'élément de jonction mâle.

6. La jonction de tuyau selon la revendication 2, caractérisé en ce que ladite rainure est dans l'élément de jonction mâle.

7. La jonction de tuyau selon la revendication 3, caractérisé en ce que ladite rainure est dans l'élément de jonction mâle.

8. La jonction de tuyau selon la revendication 4, caractérisé en ce que ladite rainure est dans l'élément de jonction mâle.

9. La jonction de tuyau selon la revendication 1, caractérisé en ce que ladite rainure est dans l'élément de jonction femelle.

10. La jonction de tuyau selon la revendication 2, caractérisé en ce que ladite rainure est dans l'élément de jonction femelle.

11. La jonction de tuyau selon la revendication 3, caractérisé en ce que ladite rainure est dans l'élément de jonction femelle.

12. La jonction de tuyau selon la revendication 4, caractérisé en ce que ladite rainure est dans l'élément de jonction femelle.

13. La jonction de tuyau selon la revendication 1, caractérisée en ce que le matériau de l'élément de jonction mâle est du métal et le matériau de l'élément de jonction femelle est du plastique.

14. La jonction de tuyau selon la revendication 1, caractérisée en ce que le matériau de l'élément de jonction mâle est du métal et le matériau de l'élément de jonction femelle est du plastique renforcé par des fibres.

15. La jonction de tuyau selon la revendication 1, caractérisée en ce que le matériau de l'élément de jonction mâle est du plastique et le matériau de l'élément de jonction femelle est du métal.

16. La jonction de tuyau selon la revendication 1, caractérisée en ce que le matériau de l'élément de jonction mâle est du plastique et le matériau de l'élément de jonction femelle est du plastique.

17. La jonction de tuyau selon la revendication 1, caractérisée en ce que le matériau de l'élément de jonction mâle est du plastique et le matériau de l'élément de jonction femelle est du plastique renforcé par des fibres.

18. La jonction de tuyau selon la revendication 1, caractérisée en ce que le matériau de l'élément de jonction mâle est du plastique renforcé par des fibres et le matériau de l'élément de jonction femelle est du métal.

19. La jonction de tuyau selon la revendication 1, caractérisée en ce que le matériau de l'élément de jonction mâle est du plastique renforcé par des fibres et le matériau de l'élément de jonction femelle est du plastique.

20. La jonction de tuyau selon la revendication 1, caractérisée en ce que le matériau de l'élément de jonction mâle est du plastique renforcé par des fibres et le matériau de l'élément de jonction femelle est du plastique renforcé par des fibres.

21. Un assemblage comprenant une jonction de tuyau selon la revendication 1, ayant un tuyau relié à ladite jonction de tuyau.

22. L'assemblage selon la revendication 21, caractérisé en ce que le tuyau est relié à l'élément de jonction mâle.

23. L'assemblage selon la revendication 21, caractérisé en ce que le tuyau est relié à l'élément de jonction femelle.

# FIG. 1

# FIG.2A

# FIG.2B

## FIG.3

## FIG.4A

## FIG.4B

# FIG. 5

# FIG. 6

# FIG.7

# FIG.8